Europäisches Patentamt

**European Patent Office**

**Office européen des brevets**

(19)

(11) Veröffentlichungsnummer: **0 107 803**
**B1**

(12) **EUROPÄISCHE PATENTSCHRIFT**

(45) Veröffentlichungstag der Patentschrift:
02.04.86

(51) Int. Cl.⁴: **H 02 J 9/06**

(21) Anmeldenummer: **83109758.9**

(22) Anmeldetag: **29.09.83**

(54) Schaltungsanordnung einer Stromquelle für die pausenlose Versorgung mit Gleichspannung.

(30) Priorität: **04.10.82 HU 317682**

(43) Veröffentlichungstag der Anmeldung:
**09.05.84 Patentblatt 84/19**

(45) Bekanntmachung des Hinweises auf die Patenterteilung:
**02.04.86 Patentblatt 86/14**

(84) Benannte Vertragsstaaten:
**AT CH DE FR IT LI**

(56) Entgegenhaltungen:
**DE - B - 1 132 232**
**US - A - 3 979 661**

**SIEMENS ZEITSCHRIFT, Band 38, Nr. 1, Januar 1964,
Seiten 20-26, Erlangen, DE, K. SAUBERT u.a.:
"Überblick über die Stromversorgung von
Fernsprechvermittlungsanlagen"**

(73) Patentinhaber: **VILLAMOSIPARI KUTATO INTEZET,
Cservenka Miklós ut 86, H-1601 Budapest XV (HU)**

(72) Erfinder: **Füzesi, Endre, Dipl.-Ing., Bimbó u.53,
H-1022 Budapest (HU)**
Erfinder: **Ganszky, Károly, Dr. Dipl.-Ing., Tusnádi ut 47,
H-1125 Budapest (HU)**
Erfinder: **Tihanyi, László, Dipl.-Ing., Nagybányai ut 46/a,
H-1025 Budapest (HU)**

(74) Vertreter: **Lehn, Werner, Dipl.-Ing. et al, Hoffmann, Eitle
& Partner Patentanwälte Arabellastrasse 4 (Sternhaus),
D-8000 München 81 (DE)**

# Beschreibung

Die Erfindung betrifft eine Schaltungsanordnung einer Stromquelle für die pausenlose Versorgung mit Gleichspannung gemäss Oberbegriff des Anspruches 1.

Im allgemeinen wird die Speisung von eine pausenlose Gleichspannung-Energieversorgung beanspruchenden Verbrauchern mit einem an einem Gleichrichter angeschlossenen Akkumulator gelöst. Wenn das den Gleichrichter speisende Netz mit Wechselspannung zur Verfügung steht, findet eine Dauerladung des Akkumulators vom Gleichrichter her statt und auch der Verbraucher wird gespeist; wenn hingegen das speisende Netz mit der Wechselspannung ausfällt, wird die Speisung des Verbrauchers vom Akkumulator übernommen. Wenn nun das Speisenetz mit der Wechselspannung wieder zur Verfügung steht, lädt der Gleichrichter den Akkumulator mit einer den Nennwert weitgehend übersteigenden Schnelladungsspannung und speist gleichzeitig den Verbraucher. Bei einer grossen Gruppe der Verbraucher ist die während der Schnelladung auftretende Spannungszunahme nicht zulässig; so muss z.B. bei der Verwendung eines einzigen Gleichrichters der Verbraucher über ein während der Schnelladung einen Spannungsabfall sicherndes Mittel an den Akkumulator angeschlossen werden, was wiederum während der Entladung kurzgeschlossen werden muss. Die erwähnte, aber mit einem Energieverlust verbundene Lösung wird z.B. bei der Glühlampenbeleuchtung in Eisenbahnpassagierwagen benutzt, wobei die Sache noch dadurch kompliziert wird, dass das Vorschaltgerät der Glühlampen in Abhängigkeit der Grösse des Verbraucherstroms geändert werden muss. In gewissen Anordnungen wird der erwähnte Nachteil dadurch eliminiert, dass zwei Gleichrichter eingesetzt werden. Dem einen wird die Aufgabe der Dauerladung bzw. der Schnelladung zugeteilt, während der andere den Verbraucher speist. Wenn das Speisenetz ausbleibt, schaltet das zu diesem Zwecke dienende Schaltgerät den Verbraucher auf den Pol des Akkumulators. Der Preis des Systems hängt über den Wert der beiden Gleichrichter auch davon ab, wie schnell das Umschaltgerät zwecks Eliminierung der transienten Spannungsdifferenz am Verbraucher funktionieren muss. Wird gegenüber der pausenlosen Versorgung mit Gleichspannung eine erhöhte Anforderung gestellt, muss das Umschaltgerät in einigen Millisekunden funktionieren; daher ist die Lösung verhältnismässig kostaufwendig und arbeitet im allgemeinen auf einem elektronischen Prinzip.

Der Erfindung wurde das Ziel gesetzt, eine Schaltungsanordnung für eine die Gleichspannung pausenlos speisende Stromquelle mit zwei Gleichrichtern und elektronischer Umschaltung nach dem erwähnten Prinzip zu schaffen, bei der, teilweise aus Gewichts- und Preisverminderungsgründen, teilweise zwecks Erhöhung des Wirkungsgrads einerseits die beiden Gleichrichter vereinigt sind, andererseits die sowieso erforderlichen Filterelemente des den Verbraucher speisenden Gleichrichters gleichzeitig die Bedingungen zur Funktion des einfach ausgestalteten elektronischen Umschalters sichern.

Das gesetzte Ziel wird mit einer Schaltungsanordnung erreicht, die einen aus dem Wechselspannungsnetz gespeisten, eine Primär- und eine Sekundärwicklung enthaltenden Transformator und einen halbgesteuerten Gleichrichter enthält, der eine aus einer mit der Sekundärwicklung verbundenen gesteuerten und ungesteuerten Halbbrücke bestehende Brückenschaltung aufweist, des weiteren die Schaltungsanordnung für die Stromquelle für die pausenlose Versorgung mit Gleichspannung einen die Spannung des Verbrauchers einstellenden, den Gleichrichter als Stellorgan betätigenden Spannungsregler enthält, innerhalb dessen Schaltung die Ausgangsklemme der gesteuerten Halbbrücke über eine Glättungsdrosselwicklung an das gemeinsame eine Ende des Verbrauchers und eines Filterkondensators angeschlossen ist, während die Ausgangsklemme der ungesteuerten Halbbrücke an das andere gemeinsame Ende des Verbrauchers und des Filterkondensators sowie an einen Pol des Akkumulators angeschlossen ist; wobei die Sekundärwicklung des Transformators über die Sekundärwicklung eines Hilfstransformators, der an seiner Primärwicklung mit Wechselspannung gespeist wird, und über einen in Serie geschalteten gesteuerten einwegigen Ladungsgleichrichter an eine Ladeklemme angeschlossen, während die Ladeklemme über eine mit einer Anzapfung versehene Drosselspule mit dem anderen Pol des Akkumulators verbunden ist, zwischen der Anzapfung und dem einen gemeinsamen Ende ein Hilfsthyristor eingeschaltet ist und die Steuerelektrode des Hilfsthyristors an einen Spannungswächter angeschlossen ist; wenn die Spannung des Wechselspannungsnetzes ausfällt, gibt der Spannungswächter einen Zündbefehl an die Steuerelektrode ab.

Weiterbildungen der Erfindung ergeben sich aus den abhängigen Ansprüchen.

Die Erfindung ist im folgenden anhand der Zeichnungen näher erläutert. Es zeigen

Fig. 1 ein Beispiel für die erfindungsgemässe Schaltungsanordnung,

Fig. 2 die Schaltungsanordnung bei einer einphasigen und dreiphasigen Lösung,

Fig. 3 die Funktion des den Akkumulator mit dem Verbraucher verbindenden Hilfsthyristors,

Fig. 4 die Schaltungsanordnung zur Regelung der Ladung,

Fig. 5 eine Möglichkeit zur Vereinfachung der erfindungsgemässen Schaltungsanordnung, und

Fig. 6 ein Beispiel für die Gestaltung des Ladereglers.

In den Zeichnungen sind die identischen Schaltungsdetails mit identischen Nummern bezeichnet.

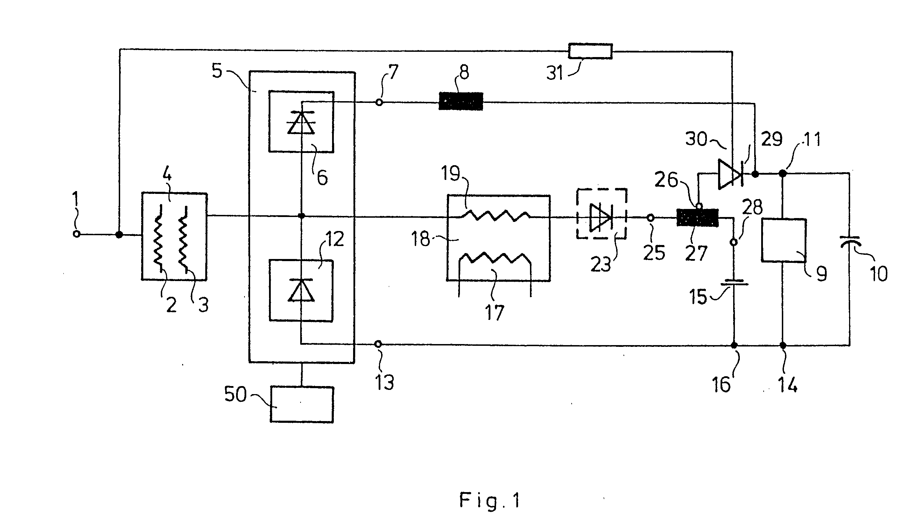

Fig. 1 zeigt die erfindungsgemässe Schaltungsanordnung zur Stromquelle für die pausenlose Versorgung mit Gleichspannung. Das Netz 1 mit der Wechselspannung speist die Primärwicklung 2 des Transformators 4. An die Sekundärwicklung 3 des Transformators 4 ist der Gleichrichter 5 angeschlossen, der eine aus der gesteuerten Halbbrücke 6 und der ungesteuerten Halbbrücke 12 bestehende Brückenschaltung enthält und halbgesteuert ist. Die Ausgangsklemme 7 der gesteuerten Halbbrücke 6 ist über die Glättungsdrosselspule 8 an das eine gemeinsame Ende 11 des Filterkondensators 10 und des Verbrauchers 9 angeschlossen. Die Ausgangsklemme 13 der ungesteuerten Halbbrücke 12 ist an das andere gemeinsame Ende 14 des Verbrauchers 9 und des Filterkondensators 10 sowie an den einen Pol 16 des Akkumulators 15 angeschlossen. Der Spannungsregler 50 hält die Spannung des Verbrauchers 9 auf einen konstanten Wert, in dem er den Gleichrichter 5 als ein Stellorgan betätigt. Im Einklang mit der Zielsetzung der Erfindung ist der den Akkumulator 15 ladende Gleichrichter mit dem Gleichrichter 5 vereinigt, und zwar über den Hilfstransformator 18 und den gesteuerten, zur Ladung dienenden Gleichrichter 23. Aus diesem Grunde ist die Sekundärwicklung 3 des Transformators 4 über die Sekundärwicklung 19 des des Hilfstransformators 18 – der über die Primärwicklung 17 mit Wechselspannung gespeist ist – und über den in Serie geschalteten, gesteuerten und einwegigen, zur Ladung dienenden Gleichrichter 23 auch an die Ladeklemme 25 angeschlossen. Die Ladeklemme 25 ist über die die Welligkeit des Ladestroms verringernde, mit der Anzapfung 26 versehene Drosselspule 27 mit dem anderen Pol 28 des Akkumulators 15 verbunden. Zwischen der Anzapfung 26 der Drosselspule 27 und dem einen gemeinsamen Ende 11 ist der Hilfsthyristor 29 eingeschaltet, dessen Steuerelektrode 30 an den Spannungswächter 31 angeschlossen ist.

Wenn das Netz mit der Wechselspannung zur Verfügung steht, versorgen der Transformator 4 und der Gleichrichter 5 unter der Wirkung des Spannungsreglers 50 mit konstanter Spannung den Verbraucher 9, und zwar mit einer von dem aus der Glättungsdrosselspule 8 und dem Filterkondensator 10 bestehenden Filterkreis sichergestellten Gleichspannung mit Oberwellengehalt. Die Ladung des Akkumulators 15 wird von der Sekundärwicklung 19 des an die Sekundärwicklung 3 des Transformators 4 angeschlossenen Transformators 18, dem in Serie geschalteten gesteuerten einwegigen, zur Ladung dienenden Gleichrichter 23 und dem aus der Halbbrücke 12 bestehenden Stromkreis – unabhängig von der Speisung des verbrauchers 9 – sichergestellt. Demnach sind in der Schaltungsanordnung die separaten Schaltungsanordnungen von zwei Gleichrichtern vereinigt, in dem einzelne Teile, wie der Transformator 4 und die ungesteuerte Halbbrücke 12 aus verschiedenen Zwecken einfach verwendet werden. Die Sekundärwicklung 19 des Hilfstransformators 18 erhöht nur um so viel die Spannung des aus der Sekundärwicklung des Transformators 4, dem gesteuerten einwegigen, zur Aufladung dienenden Gleichrichter 23 und aus der ungesteuerten Halbbrücke 12 bestehenden Gleichrichters, wie die Schnelladespannung des Akkumulators 15 die Spannung des Verbrauchers 9 überschreitet.

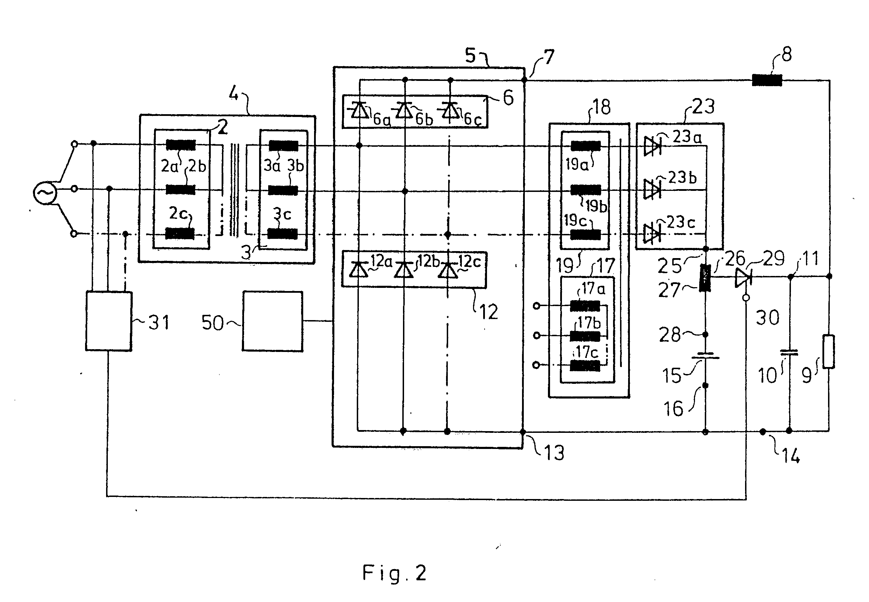

Die Schaltungsanordnung nach Fig. 1 ist in Fig. 2 ausführlicher dargestellt, die gleichzeitig ein Beispiel für die einphasige Anordnung (mit einer kontinuierlichen Linie gezeichnet) und für die dreiphasige Anordnung (kontinuierlich und strichpunktiert) gibt. Des weiteren wird lediglich die dreiphasige Anordnung geschildert, da diese auch die einphasige Anordnung enthält. Das Netz 1 mit der Wechselspannung speist mit einer dreiphasigen Spannung die Primärwicklung 2 des Transformators 4. Die Wicklung 2 besteht aus den Primärwicklungen 2a, 2b, 2c. Die gesteuerte Halbbrücke 6 des halbgesteuerten Gleichrichters 5 mit der Brückenschaltung, der mit den Phasenwicklungen 3a, 3b, 3c der Sekundärwicklung 3 verbunden ist, enthält die gesteuerten Elemente 6a, 6b, 6c, während die ungesteuerte Halbbrücke 12 die Dioden 12a, 12b, 12c enthält. Die Phasenwicklungen 3a, 3b, 3c des Transformators 4 schliessen sich über die aus den Sekundärwicklungen 19a, 19b, 19c gebildete Sekundärwicklung 19 des Hilfstransformators 18 – der an den Primärwicklungen mit Wechselspannung gespeist wird – und über den in Serie geschalteten gesteuerten, aus den Elementen 23a, 23b, 23c bestehenden einwegigen, zur Aufladung dienenden Gleichrichter 23 an die Ladeklemme 25 an.

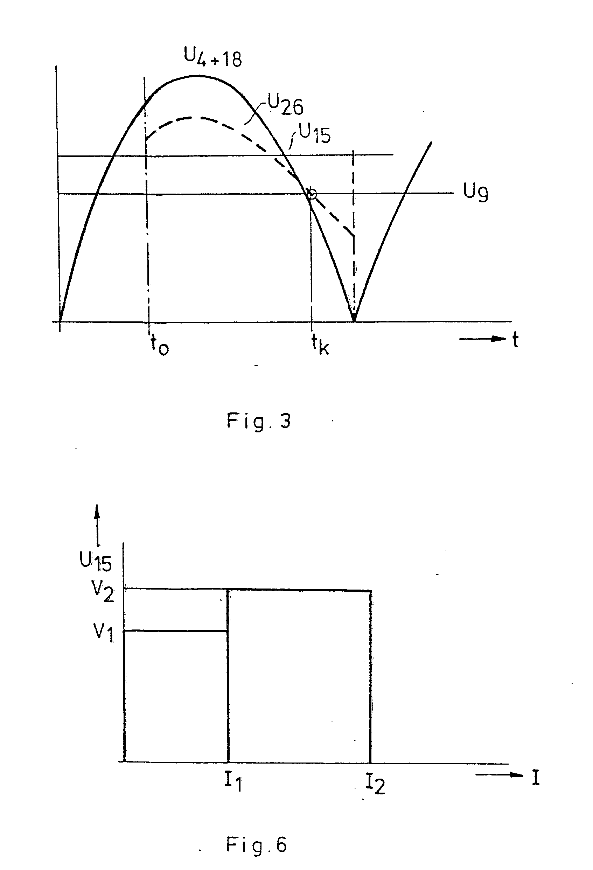

Wenn nun das Netz mit der Wechselspannung ausbleibt, gibt der Spannungswächter einen Zündbefehl auf die Steuerelektrode 30 des Hilfsthyristors 29 ab, wodurch der Hilfsthyristor 29 momentartig den Akkumulator 15 über die Anzapfung 26 der Drosselspule 27 auf den Verbraucher 9 schaltet. Im Hinblick darauf, dass das Vorhandensein bzw. das Ausbleiben des Netzes 1 mit der Wechselspannung an mehreren Punkten kontrolliert werden kann, so z.B. an der Sekundärwicklung des Transformators 4, kann der Spannungswächter 31 das Vorhandensein der Spannung an diesen kontrollieren. Wenn nun das Netz 1 mit der Wechselspannung wieder zur Verfügung steht, findet das Löschen des Hilfsthyristors 29 und dadurch das Trennen des Akkumulators 15 von dem Verbraucher 9 mit Hilfe des aus der Glättungsdrosselspule 8 und dem Filterkondensator 10 bestehenden Filterkreises momentanartig statt, auch dann, wenn die Spannung des Akkumulators 15 die Spannung des Verbrauchers 9 übertrifft. Die Erläuterung ist in der Fig. 3 gegeben.

In der zur Erläuterung dienenden Fig. 3, die der besseren Übersicht halber für eine einphasige Lösung in Abhängigkeit von der Zeit dargestellt worden ist, überschreitet die Spannung $U_{15}$ des Akkumulators 15 die Spannung $U_9$ des Verbrauchers 9, die unter der Wirkung des Filterkondensators zeitlich ungefähr konstant ist. Von dem Zeitmoment $t_0$ der Prüfung ist es wohl ersichtlich, dass an die Drosselspule 27 und den Akkumulator 15 die zwischen der Ladeklemme 25 und der Ausgangsklemme 13 der ungesteuerten Halbbrücke 12 des Gleichrichters 5 herrschende Spannung $U_{4+18}$ gelangt, die der Summe der Sekundärspannungen des Hilfstransformators 18 und des Transformators 4 gleich ist. Da der Hilfsthyristor 29 an die Anzapfung 26 der Drosselspule 27 angeschlossen ist,

gelangt auf den Hilfsthyristor 29 nur eine niedrigere Spannung $U_{26}$, die wiederum in dem Zeitmoment $t_k$ die Spannung $U_9$ des Verbrauchers 9 unterschreitet, worauf der Hilfsthyristor die Stromleitung abstellt. Auf diese Weise erfüllt die Drosselspule 27 eine doppelte Rolle; neben der oberharmonischen Herabsetzung des Ladestroms des Akkumulators 15 schafft sie auf eine kombinierte Weise die Löschbedingung für den Hilfsthyristor 29, ganz separat, ohne einen Zwangskommutierungsstromkreis.

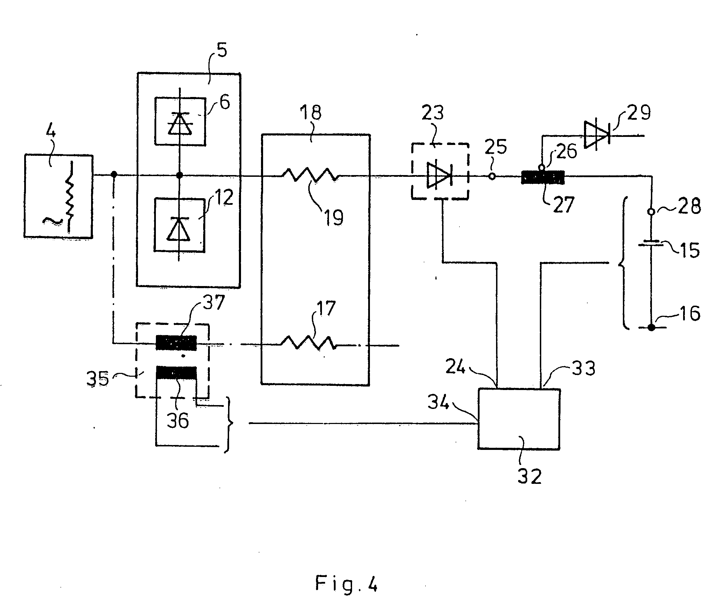

Eine weitere Ausführungsmöglichkeit der erfindungsgemässen Schaltungsanordnung ist in der Fig. 4 dargestellt, bei der der mit dem spannungskontrollierenden Signaleingang 33, dem stromkontrollierenden Eingang 34 und dem Steuerausgang 24 versehene Laderegler 32 die geregelte Ladung des Akkumulators 15 unter verwendung des einwegigen, zur Ladung dienenden Gleichrichters 23 als ein Stellorgan durchführt. Zu diesem Zweck ist der Signaleingang 33 des Ladereglers 32 mit dem einen und dem anderen Pol 16, 28 des Akkumulators 15 verbunden. Der zur Kontrolle des Stroms dienende Eingang 34 schliesst sich der Sekundärwicklung 36 des Stromwandlers 35 an, während die Messspule 37 des Stromwandlers 35 in den Stromkreis der Primärwicklung 17 des Hilfstransformators 18 in Serie eingeschaltet ist. Bei der dreiphasigen Anordnung nach Fig. 2 ist der Stromwandler 35 dreiphasig ausgestaltet, aber eine einphasige Lösung ist auch möglich. In dem letzten Fall erhält der Ladungsregler 32 sinngemäss nur das Kontrollsignal eines Phasenstroms. Der Vorteil der als Beispiel dienenden Anordnung der Laderegelung besteht darin, dass die Dauerladung und die Schnelladung des Akkumulators 15 unabhängig von dem Verbraucher 9 stattfindet, da der Strom der Primärwicklung 17 des Hilfstransformators 18 — unabhängig von dem Strom des Verbrauchers 9 — nur dem Ladestrom des Akkumulators 15 proportional ist. Der Vorteil kann wirtschaftlich besonders ausgenützt werden, wenn die Spannung des Netzes 1 mit der Wechselspannung verhältnismässig hoch ist, was z.B. bei der Verwendung in Grosszügen üblich ist. In diesem Fall, nach der strichpunktiert bezeichneten Verbindung nach Fig. 4, die gleichzeitig eine weitere Ausführungsmöglichkeit der erfindungsgemässen Schaltungsanordnung darstellt, speist die Primärwicklung 3 des Transformators 4 die Primärwicklung 17 des Hilfstransformators 18 über die Messspule 37 des Stromwandlers 35 mit der Wechselspannung. Bei dieser Lösung sind daher sowohl der Hilfstransformator als auch der Stromwandler 35 als Niederspannungseinheiten ausgestaltet, das Isolierungsniveau derselben ist wesentlich niedriger als jenes des Transformators 4.

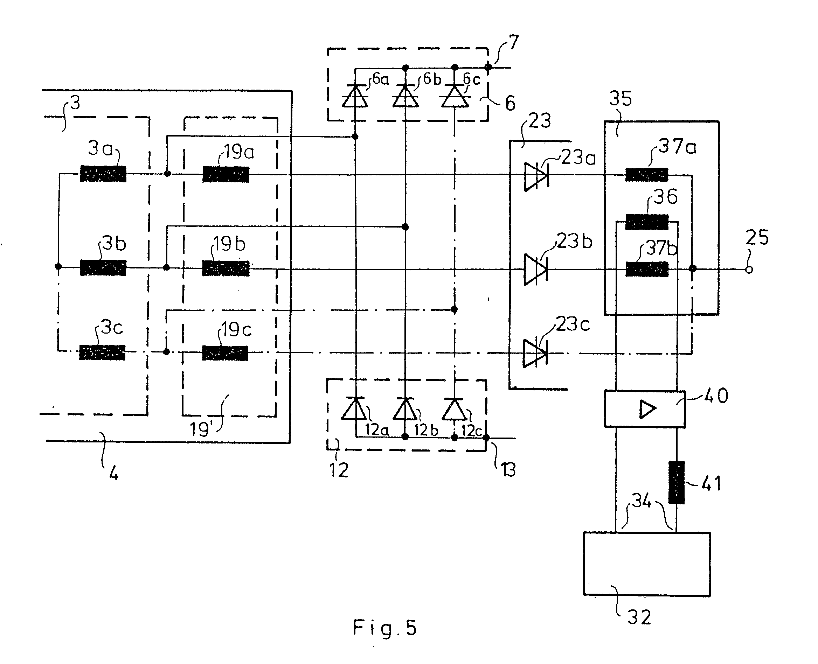

Eine weitere Ausführungsform, bei der der Transformator 4 und der Hilfstransformator 18 vereinigt sind, ist in der Fig. 5 veranschaulicht. Bei der als Beispiel dienenden Ausführung ist der Transformator 4 mit der mit der Sekundärwicklung 3 in Serie geschalteten und die Sekundärwicklung 19 des Hilfstransformators 18 ersetzenden Tertiärwicklung 19' versehen. Zur von dem Strom des Verbrauchers 9 unabhängigen Messung und Kontrolle des Ladestroms des Akkumulators 15 ist die Messspule 37 des Stromwandlers 35 als je eine Halbspule 37a, 37b ausgestaltet, während sich das gesteuerte Element 23a, 23b des gesteuerten einwegigen, zur Ladung dienenden Gleichrichters 23 mit den Halbwicklungen 37a, 37b in Serie geschaltet der Ladeklemme 25 anschliesst.

Bei der in der Fig. 5 mit einer kontinuierlichen Linie dargestellten einphasigen Anordnung kopiert der Strom der Sekundärwicklung 36 des Stromwandlers 35 den Strom der als Halbspulen 37a, 37b ausgestalteten Messspule. Bei der punktgestrichelt ergänzten dreiphasigen Anordnung fliesst ein unterbrochener Strom durch die Sekundärwicklung 36, der den Ladestrom nur streckenweise kopiert. Um einen Fehler vermeiden zu können, ist es zweckmässig, die Sekundärwicklung 36 auf an sich bekannte Weise über einen zweiwegigen Gleichrichter 40 und in Serie geschaltete Induktivität 41 absperrend an den stromkontrollierenden Eingang 34 anzuschliessen.

Diese Ausführung stellt eine weitere Vereinfachung der einphasigen Schaltungsanordnung mit den zwei Gleichrichtern dar, wobei der Vorteil behalten wird, dass das der Spannung des Netzes 1 mit der Wechselspannung entsprechende Isolierungsniveau nur bei der Primärwicklung 2 des Transformators 4 sicherzustellen ist.

Zur Gestaltung einer Stromquelle für die pausenlose Versorgung mit Gleichspannung und zur Lösung der Laderegelung des Akkumulators 15 gibt die Fig. 6 ein weiteres Beispiel, insbesondere bei der Verwendung eines alkalischen Akkumulators 15 zur Vermeidung des sogenannten «Aufsiedens der Lauge». Diese Erscheinung tritt insbesondere beim Betrieb der einer häufigen Schnellaufladung und Entladung ausgesetzten, hauptsächlich alkalischen Akkumulatoren auf, wenn zwecks schneller Wiederherstellung der Speicherfähigkeit des Akkumulators die Schnellaufladung in einem beschleunigten Tempo vorgenommen wird. Wenn nun das Netz 1 mit der Wechselspannung für ein längeres Zeitintervall ausbleibt, kommt es oft vor, dass der Akkumulator sich erwärmt und der Elektrolyt aufkocht. Um die Erscheinung, die einen Energieverlust verursacht und auch die Lebensdauer des Akkumulators verkürzt, vermeiden zu können, ist bei der hier dargestellten Ausführung der Laderegler 32 als ein Regler ausgestaltet, der in Abhängigkeit der Grösse des Ladestroms I zwei Spannungspegel $V_1$, $V_2$ gibt.

Unter der Wirkung des von dem Laderegler 32 vorgeschriebenen, forcierten Schnellaufladestroms $I_2$ erreicht die Spannung $U_{12}$ des Akkumulators 15 den Spannungspegel $V_2$, den der Laderegler 32 — bei gleichzeitiger Abnahme des Ladestroms I — auf einem konstanten Wert hält. Wenn der Ladestrom I auf den Wert des Ladestroms $I_1$ abfällt, stellt der Laderegler 32 die Ladespannung $V_{15}$ des Akkumulators 15 mit Hilfe der Intervention des gesteuerten einwegigen, zur Ladung dienenden Gleichrichters 23 auf einen Spannungspegel $V_1$ zurück, der höher ist als die Spannung $U_9$

des Verbrauchers 9, aber bei dem der Ladestrom I in der Abhängigkeit der Zeit auf ein Mass abfällt, das weder Schaden noch Verlust hervorruft.

Neben der Sicherstellung des akzessorischen Vorteils sichert die erfindungsgemässe Schaltungsanordnung auch in solchen Fällen die einwandfreie beschriebene Funktion, da der Hilfsthyristor auf die beschriebene Weise umschaltet bzw. die Stromleitung abstellt.

**Patentansprüche**

1. Schaltungsanordnung einer Stromquelle für die pausenlose Versorgung mit Gleichspannung, die einen aus einem Wechselspannungsnetz (1) gespeisten, eine Primärwicklung (2) und eine Sekundärwicklung (3) enthaltenden Transformator (4) und einen halbgesteuerten Gleichrichter (5) enthält, der eine aus einer mit der Sekundärwicklung (3) verbundenen, gesteuerten Halbbrücke (6) und einer ungesteuerten Halbbrücke (12) bestehende Brückenschaltung aufweist, des weiteren einen die Spannung eines Verbrauchers (9) einstellenden, den Gleichrichter (5) als Stellorgan betätigenden Spannungsregler (50) enthält, innerhalb dessen Schaltung die Ausgangsklemme (7) der gesteuerten Halbbrücke (6) über eine Glättungsdrosselwicklung (8) an das gemeinsame eine Ende (11) des Verbrauchers (9) und eines Filterkondensators (10) angeschlossen ist, während die Ausgangsklemme (13) der ungesteuerten Halbbrücke (12) an das andere gemeinsame Ende (14) des Verbrauchers (9) und des Filterkondensators (10) sowie an einen Pol (16) eines Akkumulators (15) angeschlossen ist, dadurch gekennzeichnet, dass die Sekundärwicklung (3) des Transformators (4) über die Sekundärwicklung (19) eines Hilfstransformators (18), der an seiner Primärwicklung (17) mit Wechselspannung gespeist wird, und über einen in Serie geschalteten gesteuerten einwegigen, zur Ladung dienenden Gleichrichter (23) an eine Ladeklemme (25) angeschlossen ist, während die Ladeklemme (25) über eine mit einer Anzapfung (26) versehene Drosselspule (27) mit dem anderen Pol (28) des Akkumulators (15) verbunden ist, zwischen der Anzapfung (26) und dem einen gemeinsamen Ende (11) ein Hilfsthyristor (29) eingeschaltet ist und die Steuerelektrode (30) des Hilfsthyristors (29) an einen Spannungswächter (31) angeschlossen ist, und, wenn die Spannung des Wechselspannungsnetzes ausfällt, der Spannungswächter (31) einen Zündbefehl an die Steuerelektrode (30) abgibt (Fig. 1 und 2).

2. Schaltungsanordnung nach Anspruch 1, dadurch gekennzeichnet, dass ein mit einem spannungskontrollierenden Signaleingang (33), mit einem stromkontrollierenden Eingang (34) und einem Steuerausgang (24) versehener Laderegler (32) vorgesehen ist, wobei das Stellorgan des Ladereglers (32) ein mit dem Steuerausgang (24) gesteuerter einwegiger, zur Ladung dienender Gleichrichter (23) ist und der spannungskontrollierende Signaleingang (33) des Ladereglers (32) an den einen und den anderen Pol (16, 28) des Akkumulators (15) angeschlossen ist, während der stromkontrollierende Eingang (34) mit der Sekundärwicklung (36) eines Stromwandlers (35) verbunden ist und des weiteren dessen Messspule (37) in den Stromkreis der Primärwicklung (17) des Hilfstransformators (18) in Serie eingeschaltet ist (Fig. 4).

3. Schaltungsanordnung nach Anspruch 1 und 2, dadurch gekennzeichnet, dass die Primärwicklung (17) des Hilfstransformators (18) über die Messspule des Stromwandlers (35) mit der Sekundärwicklung (3) des Transformators (4) verbunden ist (Fig. 4).

4. Schaltungsanordnung nach Anspruch 1 und 2, dadurch gekennzeichnet, dass der einwegige gesteuerte, zur Ladung dienende Gleichrichter (23) mindestens zwei gesteuerte Elemente (23a, 23b) aufweist und der Transformator (4) mit einer mit der Sekundärwicklung (3) in Serie geschalteten, die Sekundärwicklung des Hilfstransformators (18) bildenden Tertiärwicklung (19') versehen ist und die Messspule (37) des Stromwandlers (35) als je eine Halbwicklung (37a, 37b) ausgestaltet ist, wobei wenigstens zwei gesteuerte Elemente (23a, 23b) mit je einer Halbwicklung in Serie geschaltet an die Ladeklemme (25) angeschlossen sind (Fig. 5).

5. Schaltungsanordnung nach einem der Ansprüche 1 bis 4, dadurch gekennzeichnet, dass der Laderegler (32) als ein in Abhängigkeit der Grösse des Ladestroms (I) zwei Spannungspegel ($V_1$, $V_2$) abgebender, wertbehaltender Regler ausgestaltet ist (Fig. 6).

**Claims**

1. Circuit arrangement of a current source for the continuous supply of DC, which comprises a transformer (4) having a primary winding (2) and a secondary winding (3) and supplied from an alternating voltage source (1) and comprising a semi-controlled rectifier (5) which has a bridge circuit consisting of a controlled half bridge (6) connected to the secondary winding (3) and an uncontrolled half bridge (12), furthermore comprising a voltage regulator (50) adjusting the voltage of a load (9) and activating the rectifier (5) as a setting member, within whose circuit the output terminal (7) of the controlled half bridge (6) is connected via a suppression choke winding (8) to the common one end (11) of the load (9) and of a filter capacitor (10), whilst the output terminal (13) of the uncontrolled half bridge (12) is connected to the other common end (14) of the load (9) and of the filter capacitor (10) as well as to one pole (16) of an accumulator (15), characterised in that the secondary winding (3) of the transformer (4) is connected to a charging terminal (25) via the secondary winding (19) of an auxiliary transformer (18) which is supplied at its primary winding (17) with alternating voltage, and via a series-connected controlled one-way rectifier (23) serving for charging, whilst the loading terminal (25) is connected via a choke coil (27) provided with a tapping (26) to the other pole (28) of the accumulator (15), between which tapping (26) and the one common end (11) an auxiliary thyristor (29) is connected and the control electrode (30) of the auxiliary thyristor (29) is connected to a voltage monitor (31), and when the voltage of the alternating voltage source fails the voltage monitor (31) provides an ignition command to the control electrode (30) (Fig. 1 and 2).

2. Circuit arrangement according to claim 1, characterised in that a charge regulator (32) is provided which has a voltage controlling signal input (33) and a current controlling input (34) and a control output (24), the setting member of the charging regulator (32) being a one-way rectifier (23) controlled by the control output (24) and serving for charging and the voltage controlling signal input (33) of the charging regulator (32) being connected to the one and the other pole (16, 28) of the accumulator (15), whilst the current controlling input (34) is connected to the secondary winding (36) of a current converter (35) and furthermore its measuring coil (37) being connected in series in the current circuit of the primary winding (17) of the auxiliary transformer (18) (Fig. 4).

3. Circuit arrangement according to claims 1 and 2, characterised in that the primary winding (17) of the auxiliary transformer (18) is connected via the measuring coil of the current converter (35) to the secondary winding (3) of the transformer (4) (Fig. 4).

4. Circuit arrangement according to claims 1 and 2, characterised in that the one-way controlled rectifier (23) serving for charging has at least two controlled elements (23a, 23b) and the transformer (4) is provided with a third winding (19′) connected in series with the secondary winding (3) and forming the secondary winding of the auxiliary transformer (18), and the measuring coil (37) of the current converter (35) is arranged in each case as a respective semi-winding (37a, 37b), at least two controlled elements (23a, 23b) each connected in series to a respective semi-winding being connected to the charging terminal (25) (Fig. 5).

5. Circuit arrangement according to one of claims 1 to 4, characterised in that the charging regulator (32) is arranged as a value retaining regulating providing two voltage levels ($V_1$, $V_2$) in dependence upon the size of the loading current (I) (Fig. 6).

**Revendications**

1. Agencement de circuit d'une source de courant pour la fourniture ininterrompue d'une tension continue, qui comporte un transformateur (4) alimenté par le réseau de tension alternative (1) et comportant un enroulement primaire (2) et un enroulement secondaire (3), ainsi qu'un redresseur mixte (5) qui comporte un circuit à pont se composant d'un demi-pont commandé (6) relié à l'enroulement secondaire (3) et d'un demi-pont non commandé (12), ainsi qu'un régulateur de tension (50) réglant la tension de l'appareil de la consommation (9) et actionnant le redresseur (5) en tant qu'organe de réglage et dans le circuit duquel la borne de sortie (7) du demi-pont commandé (6) est reliée par l'intermédiaire d'une self de filtrage à une des extrémités communes (11) de l'appareil de consommation (9) et d'un condensateur de filtrage (10) tandis que la borne de sortie (13) du demi-pont non commandé (12) est reliée à l'autre extrémité commune (14) de l'appareil de consommation (9) et du condensateur de filtrage (10) ainsi qu'à un pôle (16) de l'accumulateur (15), caractérisé en ce que l'enroulement secondaire (3) du transformateur (4) est relié, par l'intermédiaire de l'enroulement secondaire (19) d'un transformateur auxiliaire (18), dont l'enroulement primaire (17) est alimenté en tension alternative, et par l'intermédiaire d'un redresseur commandé à simple alternance, servant à la charge et branché en série (23) avec une borne de charge (25), tandis que la borne de charge (25) est reliée, par l'intermédiaire d'une bobine de self (27) pourvue d'une prise intermédiaire (26), à l'autre pôle (28) de l'accumulateur (15), en ce qu'il est prévu entre la prise (26) et une des extrémités communes (11) un thyristor (29) dont l'électrode de commande (30) est reliée à un contrôleur de tension (31) et en ce que, lorsque la tension du réseau d'alimentation en tension alternative diminue, le contrôleur de tension (31) fournit un ordre d'amorçage à l'électrode de commande (30) (fig. 1 et 2).

2. Agencement de circuit selon la revendication 1, caractérisé en ce qu'il est prévu un régulateur de charge (32) pourvu d'une entrée de signal (33) de contrôle de tension, d'une entrée (34) de contrôle de courant et d'une sortie de commande (24), en ce que l'organe de réglage du régulateur de charge (32) est un redresseur de charge (23) à simple alternance commandé par la sortie de commande (24), et en ce que l'entrée de signal (33) de commande de tension du régulateur de charge (32) est reliée à l'un et l'autre pôles (16, 28) de l'accumulateur (15), tandis que l'entrée (34) de contrôle de courant est reliée à l'enroulement secondaire (36) d'un convertisseur de courant (35), et en ce qu'en outre la bobine de mesure (37) de celui-ci est branchée en série dans le circuit de l'enroulement primaire (17) du transformateur auxiliaire (18) (fig. 4).

3. Agencement de circuit selon les revendications 1 et 2, caractérisé en ce que l'enroulement primaire (17) du transformateur auxiliaire (18) est relié par l'intermédiaire de la bobine de mesure du convertisseur de courant (35) avec l'enroulement secondaire (3) du transformateur (4) (fig. 4).

4. Agencement de circuit selon les revendications 1 et 2, caractérisé en ce que le redresseur servant à la charge (23), à simple alternance et commandé, comporte au moins deux éléments commandés (23a, 23b) et le transformateur (4) est pourvu d'un enroulement tertiaire (19′) branché en série avec l'enroulement secondaire (3) et formant l'enroulement secondaire du transformateur auxiliaire (18), et la bobine de mesure (37) du convertisseur de courant (35) est agencée sous forme de deux demi-enroulements (37a, 37b), au moins deux éléments commandés (23a, 23b) étant reliés, en étant chacun branché en série avec un demi-enroulement, à la borne de charge (25) (fig. 5).

5. Agencement de circuit selon l'une des revendications 1 à 4, caractérisé en ce que le régulateur de charge (32) est agencé comme un régulateur de maintien de valeur établissant, en fonction de la grandeur du courant de charge (I), deux niveaux de tension ($V_1$, $V_2$) (fig. 6).

Fig.1

0 107 803

Fig. 2

0 107 803

Fig. 3

Fig. 6

Fig. 4

Fig. 5